# EUROPÄISCHE PATENTSCHRIFT

(11) **EP 0 740 675 B1**
(45) Veröffentlichungstag und Bekanntmachung des Hinweises auf die Patenterteilung: **21.11.2001**
(21) Anmeldenummer: 95905620.1
(22) Anmeldetag: 11.01.1995
(51) Int. Cl.: C08G 18/36, C08G 18/32, C08G 18/67, C09J 175/04

(54) **ZWEIKOMPONENTEN-POLYURETHANKLEBSTOFF MIT VERBESSERTEM KLEBEVERMÖGEN**
TWO-PART POLYURETHANE ADHESIVE WITH IMPROVED ADHESIVE POWER
ADHESIF AU POLYURETHANE A DEUX COMPOSANTS AVEC UNE ADHESIVITE AMELIOREE

(30) Priorität: 20.01.1994 DE 4401572
(43) Veröffentlichungstag der Anmeldung: 06.11.1996
(73) Patentinhaber: Henkel Kommanditgesellschaft auf Aktien, 40191 Düsseldorf (DE)
(72) Erfinder: GRÜNEWÄLDER, Bernhard, D-40721 Hilden (DE); DAUTE, Peter, D-27616 Beverstedt (DE); KLEIN, Johann, D-40233 Düsseldorf (DE); DZIALLAS, Michael, D-42781 Haan (DE); HÜBNER, Wilfried, D-40764 Langenfeld (DE)
(86) Internationale Anmeldenummer: EP9500089
(87) Internationale Veröffentlichungsnummer: WO9520002

(56) Entgegenhaltungen:
- DE-A- 3 347 045
- DE-A- 4 114 022
- US-A- 3 424 766

## Beschreibung

Die Erfindung betrifft einen zweikomponentigen Polyurethanklebstoff mit verbesserten Klebeeigenschaften, der als Polyolkomponente Polyole auf Basis nachwachsender Rohstoffe enthält.

Polyurethanklebstoffe sind seit Jahren bekannt und weit verbreitet. Von besonderer Wichtigkeit, insbesondere bei technischen Anwendungen, sind dabei die Zweikomponentenklebstoffe, die vom Verwender vor Verkleben zu einer Reaktionsmischung verrührt werden, die dann nach Auftragen auf die zu verklebenden Substrate aushärtet. Derartige Zweikomponentenklebstoffe bestehen aus einer Polyolkomponente und einer Isocyanatkomponente der Funktionalität 2 und höher.

Als Polyole auf Basis nachwachsender Rohstoffe eignen sich unter anderem Ricinusöl oder die in der DE-A1 33 47 045 beschriebenen oleochemischen Polyole, die im wesentlichen durch Reaktion epoxidierter Fettstoffe mit Alkoholen zugänglich sind.

Die Ringöffnung epoxidierter Fettsäureester mit Diolen und die Verwendung der resultierenden fettchemischen Polyole als Rohstoffe für Polyurethane wird in der CA-A 850 672 beschrieben. In dieser Patentschrift wird ausgeführt, daß zur Erreichung einer ausreichenden Topfzeit der Polyurethane das nicht abreagierte Diol abdestilliert werden muß. In Beispiel 1 werden detaillierte Vorschriften zur Entfernung von Diolspuren durch eine Vakuum-Dampfdestillation gegeben.

Die nach der Lehre der DE-A1 33 47 045 hergestellten Klebstoffe haben den Nachteil, daß sie unter Klimabedingungen mit hoher Luftfeuchtigkeit oder bei Belastung mit Schwitzwasser keine hohe Klebkraft besitzen. Nach der Lehre der DE-A1 40 41 119 sollte diesem Mangel dadurch abgeholfen werden, daß mehrfunktionelle, nicht-verseifbare Alkohole, die durch ringöffnende Umsetzung epoxidierter innenständiger Olefine oder epoxidierter Fettalkohole erhalten werden, allein oder in Abmischung mit niedermolekularen Diolen oder Triolen den Polyolen auf Basis nachwachsender Rohstoffe in Mengen von 3 bis 50 Gew.% bezogen auf entstehendes Polyurethan zugesetzt werden. Wie aus den dort angegebenen Beispielen ersichtlich, bedeutet das, daß bevorzugt 33 Gew.% bezogen auf das Polyol, im Minimalfall 11 Gew.% bezogen auf das Polyol eingesetzt werden.

Die genannten Alkohole sind aber nur durch aufwendige Verfahren herzustellen, z.B. muß zunächst ein ungesättigter

Fettalkohol epoxidiert und danach einer Ringöffnung unterzogen werden. Die Ringöffnung von Epoxiden mit mehrwertigen Alkoholen erfordert wegen der Vernetzungsgefahr bei der Reaktion eine sorgfältige Kontrolle.

Es hat sich gezeigt, daß die Steigerung des Klebevermögens, insbesondere unter Feuchtebedingungen, durch Zusatz von Diolen oder Diolgemischen kein additiver Effekt ist, der sich bei weiterer Erhöhung der Mengen beliebig steigern ließe. Vielmehr liegt bezüglich der Menge ein Optimum vor.

Weiterhin hat sich gezeigt, daß nicht alle Diole, sondern nur solche mit bestimmten Hydroxylzahlen oder Gemische mit diesen Hydroxylzahlen geeignet sind.

So ist aus der deutschen Patentanmeldung DE-A-41 14 022 die Verwendung von (partiell) dehydratisierten Ricinusölen als Reaktivbestandteil einer Polyolmischung zur Herstellung von Polyurethan-Klebemassen bekannt. Die in der DE-A-41 14 022 zur Anwendung kommende Polyolkomponente enthält neben den angesprochenen Rizinusölen auch Anteile eines weiteren, zwei-, drei- oder höherwertigen Alkohols wie 1,4-Butandiol, beispielsweise in einer Menge von 7,5 Gew.%, bezogen auf das Gewicht des Ricinusöls.

Die Aufgabe der Erfindung bestand dementsprechend darin, durch Zusatz von Diolen oder Diolgemischen oder Mischungen daraus mit bestimmten Hydroxylzahlen in bestimmten Mengen zur Polyolkomponente eine einfach durchzuführende Methode zur Verfügung zu stellen, mit der die Klebkraft von oleochemische Polyole enthaltenden Zweikompontenpolyurethan-Klebstoffen, vor allem unter Feuchtebedingungen, verbessert werden kann.

Gegenstand der Erfindung sind Zweikomponenten-Polyurethanklebstoffe, auf Basis
a) einer Polyolkomponente, enthaltend oleochemische Polyole, und
b) einer Isocyanatkomponente,
   bei denen die Komponente a) 4 bis 7 Gew.% 2,3-, 1,4-Butandiol oder deren Gemische - bezogen auf das oleochemische Polyol - enthält.

Ein weiterer Gegenstand der Erfindung ist eine oleochemische Polyole enthaltende Polyolkomponente zur Herstellung von Polyurethanen, in der 4 bis 7 Gew.% 2,3-, 1,4-Butandiol oder deren Gemische - bezogen auf das oleochemische Polyol - enthalten sind.

Ein weiterer Gegenstand der Erfindung betrifft die Verwendung von Zweikomponenten-Polyurethanklebstoffen zum Verkleben von starren oder flexiblen Substraten, insbesondere von Kunststoffen, Metallen, Glas oder besonders bevorzugt Holz miteinander oder mit sich selbst.

Als Diole oder Diolgemische können Diole mit einer Hydroxylzahl von 1247 eingesetzt werden, nämlich

2,3-Butandiol oder 1,4-Butandiol. Besonders bevorzugt wird 1,4-Butandiol eingesetzt.

Die Mengen der Diole oder Diolgemische oder ihrer Mischungen liegen bevorzugt zwischen 4 und 6 Gew.%, bezogen auf das oleochemische Polyol.

Die Polyole der erfindungsgemäßen Polyurethanklebstoffe enthalten oleochemische Polyole. Unter oleochemischen Polyolen versteht man Polyole auf Basis natürlicher Öle und Fette, z.B. die Reaktionsprodukte von epoxidierten Fettstoffen mit mono-, di- oder polyfunktionellen Alkoholen oder Glycerinester langkettiger Fettsäuren, die zumindest teilweise mit Hydroxylgruppen substituiert sind.

Eine Untergruppe dieser Verbindungen sind die Ringöffnungsprodukte epoxidierter Triglyceride, also epoxidierter Fettsäureglycerinester, bei denen die Ringöffnung unter Erhalt der Esterbindungen ausgeführt worden ist. Zur Herstellung der Ringöffnungsprodukte kann man von einer Vielzahl epoxidierter Triglyceride pflanzlichen oder tierischen Ursprungs ausgehen. So sind beispielsweise epoxidierte Triglyceride geeignet, die 2 bis 10 Gewichtsprozent Epoxidsauerstoff aufweisen. Derartige Produkte sind durch Epoxidation der Doppelbindungen aus einer Reihe von Fetten und Ölen herstellbar, z.B. Rindertalg, Palmöl, Erdnußöl, Rüböl, Baumwollsaatöl, Sojaöl, Sonnenblumenöl und Leinöl. Besonders bevorzugte epoxidierte Triglyceride sind epoxidiertes Sojaöl und epoxidiertes Leinöl.

Als Alkohole für die Ringöffnung der epoxidierten Triglyceride können Methanol, Ethanol, Propanol, Isopropanol, Butanol, Hexanol, 2-Ethylhexanol, Fettalkohole mit 6 bis 22 C-Atomen, Cyclohexanol, Benzylalkohol, 1,2-Ethandiol, 1,2-Propandiol, 1,3-Propandiol, 1,4-Butandiol, 1,6-Hexandiol, Neopentylglykol, Trimethylolpropan, Glycerin, Trimethylolethan, Pentaerythrit, Sorbit sowie ethergruppenhaltige
Hydroxyverbindungen wie Alkylglykole oder oligomere Glykole sowie oligomere Glycerine eingesetzt werden.

Die Ringöffnungsreaktion epoxidierter Fettsäureester oder Triglyceride mit einem Alkohol kann gegebenenfalls von einer Umesterung mit sich selber oder anderen, nachträglich zugefügten Triglyceriden, wie zum Beispiel Palmöl, Erdnußöl, Rüböl, Baumwollsaatöl, Sojaöl, Sonnenblumenöl und Leinöl, gefolgt sein. Solche oleochemischen Polyole sind z.B. in der deutschen Patentanmeldung DE-A1 41 28 649 beschrieben.

Eine weitere Gruppe der oleochemischen Polyole sind Ringöffnungs- und Umesterungsprodukte von epoxidierten Fettsäureestern niederer Alkohole, also von epoxidierten Fettsäuremethyl-, -ethyl-, -propyl- oder -butylestern. Bevorzugt sind hier die Ringöffnungs- oder Umesterungsprodukte mit Alkoholen der Funktionalität 2 bis 4, insbesondere die Umsetzungsprodukte mit Ethylenglykol, Propylenglykol, oligomeren Ethylenglykolen, oligomeren Propylenglykolen, Glycerin, Trimethylolpropan oder Pentaerythrit. Die Herstellung derartiger Produkte kann nach bekannten Epoxidations- oder Ringöffnungsverfahren erfolgen, wobei die Umesterung während oder nach dem Ringöffnungsschritt durch Entfernen des niederen Alkohols aus den Reaktionsgleichgewicht durchgeführt werden kann. Bevorzugt sind Ringöffnungs- und Umesterungsprodukte, bei denen ein molares Verhältnis zwischen epoxidiertem Fettsäureester und dem zur Umsetzung verwendeten Alkohol von 1:1 bis 1:10 angewandt worden ist.

Ebenfalls zu den oleochemischen Polyolen zählen die Umsetzungsprodukte epoxidierter Fettalkohole mit C2-C8-Alkoholen der Funktionalität 1 bis 10, insbesondere 2 bis 4, im molaren Verhältnis der Epoxidgruppen zu den Hydroxylgruppen von 1:1 bis 1:10.

Im Rahmen der Erfindung ist auch die Verwendung von oleochemischen Polyolen möglich, die über die Umesterung von di- oder polyfunktionellen Alkoholen wie z.B. dem Additionsprodukt von Ethylenoxid oder Propylenoxid an Glycerin mit Triglyceriden, wie z.B. Palmöl, Erdnußöl, Rüböl, Baumwollsaatöl, Sojaöl, Sonnenblumenöl und Leinöl, zugänglich sind.

Ebenso können Polyole verwendet werden, die nach der Lehre der DE-A1 41 24 665 durch die Umesterung von polymerisiertem Glycerin mit den vorstehend genannten Triglyceriden erhältlich sind.

Die Polyole können Hydroxylzahlen von 50 bis 400, bevorzugt 100 bis 300 aufweisen.

Besonders bevorzugt ist die Verwendung von Ricinusöl als oleochemisches Polyol.

Die zweite Komponente der erfindungsgemäßen Klebstoffe, die sogenannte Isocyanatkomponente, kann eine Isocyanatverbindung mit der Funktionalität von 2 bis 4 enthalten.

Geeignet sind sowohl aromatische als auch aliphatische, monocyclische wie polycylische, mehrfunktionelle Isocyanatverbindungen. Als aromatische di- oder höherfunktionelle Isocyanate eignen sich 2,4-Toluylendiisocyanat, 2,6-Toluylendiisocyanat oder seine Mischungen, Diphenylmethandiisocyanat oder seine technischen Qualitäten, die höherfunktionelle Isocyanate enthalten. Bevorzugt werden aliphatische Isocyanate der Funktionaltät 2 und höher eingesetzt, z.B. Isophorondiisocyanat, trimerisiertes, Isocyanuratgruppen enthaltendes Isophorondiisocyanat oder 1,6-Hexandiisocyanat, trimerisiertes, Biuret-Gruppen enthaltendes 1,6-Hexandiisocyanat und Dicyclohexylmethandiisocyanat.

Nach einer besonders bevorzugten Ausführungsform der Erfindung wird als aliphatische Isocyanatverbindung ein modifiziertes, trimerisiertes 1,6-Hexandiisocyant eingesetzt, das unter der Bezeichnung "Desmodur(R) DA" (Bayer AG, Leverkusen, FRG) im Handel ist.

Weiterhin können in den erfindungsgemäßen Zweikomponenten-Polyurethanklebstoffen als Isocyanate auch Addukte mehrfunktioneller Isocyanate an mehrfunktionelle Alkohole, etwa die Umsetzungsprodukte eines der vorgenannten aromatischen oder aliphatischen Diisocyanate mit beispielsweise Ethylenglykol, Propylenglykol, Glycerin, Trimethylolpropan oder Pentaerythrit eingesetzt werden.
Auch die Umsetzungsprodukte von Diisocyanaten mit Polyetherpolyolen, z.B. Polyetherpolyolen auf Basis von Polypropylenoxid, können als Isocyanatkomponente verwendet werden.

Das Verhältnis der in der Isocyanatkomponente enthaltenen Isocyanatgruppen zu den in der Polyolkomponente enthaltenen OH-Gruppen liegt in der Regel im Bereich der Äquivalenz, d. h. das Verhältnis NCO:OH liegt zwischen 1,1 und 0,9, bevorzugt um 1,0.

Die erfindungsgemäßen Zweikomponenten-Polyurethanklebstoffe können weiterhin verschiedene Hilfsstoffe enthalten, die vorzugsweise der Polyolkomponente zugemischt werden. Eingesetzt werden können hier z.B. Füllstoffe. Als Füllstoffe geeignet sind gegenüber Isocyanaten nicht reaktive anorganische Verbindungen wie Kreide, durch eine Beschichtung vorbehandelte Kreide, Kalkmehl, gefällte Kieselsäuren, Zeolithe, Bentonite, Glashohlkugeln, gemahlene Mineralien sowie andere, dem auf dem Arbeitsgebiet tätigen Fachmann bekannte anorganische Füllstoffe. Witerhin können auch organische Füllstoffe verwendet werden, insbesondere Faserkurzschnitte, Kunststoffhohlkugeln und anderes. Bevorzugt sind Füllstoffe, die den Klebstoffmischungen Thixotropie verleihen.

Außer den genannten Verbindungen können die erfindungsgemäßen Polyurethanklebstoffe noch weitere Hilfsstoffe enthalten. Zu erwähnen sind Weichmacher, Flammschutzmittel, Verzögerer, Farbstoffe und Alterungsschutzmittel wie sie in entsprechenden Klebstoffen bekannt sind. Verwendet werden können, obgleich nicht bevorzugt, auch Lösungsmittel, die nicht mit den Isocyanatgruppen reagieren, wie Ester, Ketone und aromatische Kohlenwasserstoffe.
Die Hilfsstoffe können in Mengen von 0,1 bis 75 Gew.% bezogen auf den Klebstoff enthalten sein.

Die erfindungsgemäßen Klebstoffe können weiterhin Beschleuniger enthalten. Geeignet sind z.B. tertiäre Basen, wie Bis-(N,N-dimethylamino)-diethylether, N,N-Dimethylbenzylamin, N-Methylmorpholin sowie die Umsetzungsprodukte von Dialkyl-(β-hydroxyethyl)-aminen mit Monoisocyanaten und Veresterungsprodukte dieser Amine mit Dicarbonsäuren. Ein weiterer wichtiger Beschleuniger ist 1,4-Diazabicyclo-(2.2.2)-octan, abgekürzt DABCO.
Ferner können nicht-basische Substanzen als Beschleuniger verwendet werden. Hier seien Metallverbindungen genannt, beispielsweise Eisenacetylacetonat, Zinn-(II)-octoat, Dibutylzinndilaurat und Zinnmercaptide.
Die Beschleuniger können in Mengen von 0,001 bis 1 Gew.% bezogen auf den Klebstoff enthalten sein.

Die erfindungsgemäßen Zweikomponenten-Polyurethanklebstoffe werden üblicherweise bis zu ihrer Anwendung zweikomponentig gelagert, das heißt bis zu diesem Zeitpunkt werden Polyol- und Isocyanatkomponente getrennt aufbewahrt. Zur Anwendung werden diese beiden Verbindungen in an sich bekannter Weise miteinander vermischt und das Gemisch auf die zu verklebenden Substrate aufgetragen.

Die erfindungsgemäßen Polyurethanklebstoffe sind zum Verbinden einer Vielzahl flexibler und starrer Substrate geeignet. So können Kunststoffe, Holz und Metalle in vielfältiger Weise unter sich oder miteinander verbunden werden.
Besonders geeignet sind die erfindungsgemäßen Klebstoffe zur Verklebung von Holz mit sich selber oder anderen Substraten.

Ebenso ist eine Verwendung der Klebstoffe als Spachtelmasse mit klebenden Eigenschaften, zum Beispiel bei der Restaurierung von Holzgegenständen, möglich.

Eine weitere Verwendung ist als Verguß- oder Dichtmasse denkbar.

### Beispiele

Alle prozentualen Angaben in den Beispielen verstehen sich, sofern nicht anders angeben, als Gewichtsprozent.

Die Untersuchungen wurden an folgender 2K-Polyurethan-Klebstoffrezeptur durchgeführt:

### Polyol-Komponente:

| | |
|---|---|
| Ricinusöl (Hydroxyl-Zahl = 165) | 42,0 g |
| Baylith^{(R)} L-Pulver | 8,0 g |
| Socal^{(R)} 312 N | 49,9 g |
| Formrez^{(R)} UL-24 | 0,1 g |
| Polyol-Komponente | 100,0 g |

Baylith L-Pulver (Firma Bayer AG) ist ein Zeolith, der als Trockenmittel eingesetzt wird.
Socal 312 N (Firma Solvay) ist mit Stearinsäure beschichtete Kreide, die als Füllstoff eingesetzt wird.
Formrez UL 24 (Firma Witco) ist ein Sn-haltiger Beschleuniger.

Zu jeweils 100 g der Härterkomponente (entsprechend 0,124 mol OH) wurden jeweils äquivalente molare Mengen an Diolen gegeben (0,044 mol) und mit dem modifizierten Polyisocyanat Desmodur ^{(R)} DA der Firma Bayer
(NCO-Gehalt = 19,5%) vermischt.
Das NCO:OH-Verhältnis betrug 1:1.
Die Zusammensetzungen der Klebstoffe sind in Tabelle 1 zusammengefaßt.

**Tabelle 1:**

| Klebstoff-Zusammensetzungen | | | | |
|---|---|---|---|---|
| Beispiel | Diol | OHZ | Menge (g) | Desmodur DA (g) |
| 1 | 1,4-Butandiol | 1247 | 2,00 | 36,2 |
| V | ohne | - | - | 26,6 |

### Legende zu Tabelle 1:

Die OH-Zahl (OHZ) wurde nach DIN 53240 bestimmt.

Für die anwendungstechnische Prüfung der Klebstoffe wurden Prüfkörper nach DIN 53254 mit den Klebstoffen aus der Tabelle 1 hergestellt und anschließend in Anlehnung an die EN (Europäische Norm) 204 (frühere Ausgabe DIN 68602 von April 1979) "Beurteilung von Klebstoffen für nichttragende Bauteile zur Verbindung von Holz und Holzwerkstoffen" geprüft.

Für die D3-Beanspruchungsgruppe (Lagerungsfolge 3) dieser Norm wird die Klebeverbindung vor der Messung der Zugscherfestigkeit 7 Tage bei Normalklima 20/65 und anschließend 4 Tage in Wasser von 20°C gelagert. Zur Erfüllung der Norm wird ein Wert > 2 N/mm² gefordert.

Für die D4-Beanspruchung (Lagerungsfolge 5) wird die Klebeverbindung vor der Messung der Zugscherfestigkeit 7 Tage bei Normalklima 20/65, 6 Stunden in kochendem Wasser und 2 Stunden in Wasser mit einer Temperatur von 20°C gelagert. Zur Erfüllung der Norm wird ein Wert > 4 N/mm² gefordert.

Die Shore D Härte wird nach DIN 53505 bestimmt.

Die Ergebnisse sind in Tabelle 2 zusammengefaßt.

**Tabelle 2:**

| Ergebnisse der anwendungstechnischen Prüfung | | |
|---|---|---|
| **Beispiele** | **1** | **V** |
| D3-Prüfung [N/mm²] | 3,6 | 3,1 |
| D4-Prüfung [N/mm²] | 4,5 | 3,0 |
| Shore-Härte D | 50 | 47 |

Nur das erfindungsgemäße Beispiel 1 erfüllt die D3- und D4-Beanspruchungsgruppe der Europäischen Norm EN 204.

## Patentansprüche

1. Zweikomponenten-Polyurethanklebstoff auf Basis
a) einer Polyolkomponente, enthaltend oleochemische Polyole, und
b) eine Isocyanatkomponente,
**dadurch gekennzeichnet, daß** die Komponente a) 4 bis 7 Gew.-% 2,3- , 1,4-Butandiol oder deren Gemische, bezogen auf das oleochemische Polyol, enthält.

2. Zweikomponenten-Polyurethanklebstoffe nach Anspruch 1, **dadurch gekennzeichnet, daß** die Komponente a) Butandiole in Mengen von 4 bis 6 Gew.-%, bezogen auf das oleochemische Polyol, enthält.

3. Zweikomponenten-Polyurethanklebstoffe nach den Ansprüchen 1 und 2,
**dadurch gekennzeichnet, daß** die oleochemischen Polyole Ringöffnungsprodukte von epoxidierten Triglyceriden oder Fettsäureestern mit mono-, di- oder polyfunktionellen Alkoholen, wobei der Ringöffnungsreaktion gegebenenfalls eine Umesterungsreaktion mit sich selber oder weiteren Triglyceriden folgt, darstellen.

4. Zweikomponenten-Polyurethanklebstoffe nach den Ansprüchen 1 bis 3, **dadurch gekennzeichnet, daß** das oleochemische Polyol Rizinusöl darstellt.

5. Zweikomponenten-Polyurethanklebstoffe nach den Ansprüchen 1 bis 4, **dadurch gekennzeichnet, daß** die Isocyanatkomponente aliphatische Isocyanatverbindungen mit der Funktionalität 2 bis 4 darstellt.

6. Zweikomponenten-Polyurethanklebstoffe nach den Ansprüchen 1 bis 5, **dadurch gekennzeichnet, daß** das molare Verhältnis der NCO-Gruppen aus der Isocyanatkomponente zu den OH-Gruppen aus der Polyolkomponente NCO:OH zwischen 1,1 und 0,9 liegt.

7. Zweikomponenten-Polyurethanklebstoffe nach den Ansprüchen 1 bis 6, **dadurch gekennzeichnet, daß** als Butandiol 1,4-Butandiol enthalten ist.

8. Oleochemische Polyole enthaltende Polyolkomponente zur Herstellung von Polyurethanen, **dadurch gekennzeichnet, daß** in ihr 4 bis 7 Gew.-% 2,3-, 1,4-Butandiol oder deren Gemische - bezogen auf das oleochemische Polyol-enthalten sind.

9. Oleochemische Polyole enthaltende Polyolkomponente zur Herstellung von Polyurethanen nach Anspruch 8, **dadurch gekennzeichnet, daß** in ihr Butandiole in Mengen von 4 bis 6 Gew.-%, bezogen auf das oleochemische Polyol, enthalten sind.

10. Verwendung von Zweikomponenten-Polyurethanklebstoffen nach den Ansprüchen 1 bis 6 zum Verkleben von starren oder flexiblen Substraten, insbesondere von Kunststoffen, Metallen, Gals oder besonders bevorzugt Holz miteinander oder mit sich selbst.

11. Verwendung von Zweikomponenten-Polyurethanklebstoffen nach Anspruch 10 zum Verkleben von Kunststoffen, Metallen, Glas oder Holz miteinander oder mit sich selbst.

## Claims

1. A two-component polyurethane adhesive based on
a) a polyol component containing oleochemical polyols and
b) an isocyanate component,
**characterized in that** component a) contains 4 to 7% by weight of 2,3-, 1,4-butanediol or mixtures thereof, based on the oleochemical polyol.

2. Two-component polyurethane adhesive as claimed in claim 1, **characterized in that** component a) contains butanediols in quantities of 4 to 6% by weight, based on the oleochemical polyol.

3. Two-component polyurethane adhesives as claimed in claims 1 and 2, **characterized in that** the oleochemical polyols are ring-opening products of epoxidized triglycerides or fatty acid esters with mono-, di- or polyhydric alcohols, the ring-opening reaction optionally being followed by a transesterification reaction with the products themselves or with other triglycerides.

4. Two-component polyurethane adhesives as claimed in claims 1 to 3, **characterized in that** the oleochemical polyol is castor oil.

5. Two-component polyurethane adhesives as claimed in claims 1 to 4, **characterized in that** the isocyanate component is an aliphatic isocyanate compound with a functionality of 2 to 4.

6. Two-component polyurethane adhesives as claimed in claims 1 to 5, **characterized in that** the molar ratio of the NCO groups from the isocyanate component to the OH groups from the polyol component NCO:OH is between 1.1 and 0.9:1.

7. Two-component polyurethane adhesives as claimed in claims 1 to 6, **characterized in that** 1,4-butanediol is present as the butanediol.

8. Polyol component containing oleochemical polyols for the production of polyurethanes, **characterized in that** it contains 4 to 7% by weight of 2,3-, 1,4-butanediol or mixtures thereof, based on the oleochemical polyol.

9. Polyol component containing oleochemical polyols for the production of polyurethanes as claimed in claim 8, **characterized in that** it contains butanediols in quantities of 4 to 6% by weight, based on the oleochemical polyol.

10. The use of the two-component polyurethane adhesives claimed in claims 1 to 6 for bonding rigid or flexible substrates, particularly plastics, metals, glass and, above all, wood, to one another or to themselves.

11. The use of two-component polyurethane adhesives as claimed in claim 10 for bonding plastics, metals, glass or wood to one another or to themselves.

## Revendications

1. Adhésif au polyuréthane à deux composants à base de :
a) un composant polyol contenant des polyols oléochimiques, et
b) un composant isocyanate
**caractérisé en ce que**
le composant a) contient de 4 à 7 % en poids de 2,3 ou de 1,4-butanediol ou de ses mélanges, rapporté au polyol oléochimique.

2. Adhésifs au polyuréthane à deux composants selon la revendication 1,
**caractérisés en ce que**
le composant a) contient des butanediols en quantités allant de 4 à 6 % en poids rapporté au polyol oléochimique.

3. Adhésifs au polyuréthane à deux composants selon les revendications 1 et 2,
**caractérisés en ce que**
les polyols oléochimiques représentent des produits d'ouverture du cycle de triglycérides époxydés ou d'esters d'acide gras avec des alcools mono-, di- ou polyfonctionnels, pour lesqucls la réaction d'ouverture du cycle, est suivie éventuellement d'une réaction de transestérification avec le triglycéridc lui-même ou avec d'autres triglycérides.

4. Adhésifs au polyuréthane à deux composants selon l'une quelconque des revendications 1 à 3,
**caractérisés en ce que**
le polyol oléochimique est de l'huile de ricin.

5. Adhésifs au polyuréthane à deux composants selon les revendications 1 à 4,
**caractérisés en ce que**
le composant isocyanate représente des composés d'isocyanate aliphatiques ayant une fonctionnalité de 2 à 4.

6. Adhésifs au polyuréthane à deux composants selon les revendications 1 à 5,
**caractérisés en ce que**
le rapport molaire des groupes NCO provenant du composant isocyanate aux groupes OH provenant du composant polyol, NCO : OH se situe entre 1,1 et 0,9.

7. Adhésifs au polyuréthane à deux composants selon les revendications 1 à 6,
**caractérisés en ce que**
lc butanediol, est le 1,4-butanediol.

8. Composant polyol contenant des polyols oléochimiques en vue dc la préparation de polyuréthanes,
**caractérisé par**
4 à 7 % en poids de 2,3- ou de 1,4-butanediol ou de leurs mélanges, rapporté au polyol oléochimique.

9. Composant polyol contenant des polyols oléochimiques en vue de la préparation de polyuréthanes selon la revendication 8,
**caractérisé en ce qu'**il contient des butanediols en quantités allant de 4
à 6 % en poids, rapporté au polyol oléochimique.

10. Utilisation des adhésifs au polyuréthane à deux composants selon les revendications 1 à 6, en vue de l'encollage de substrats rigides ou flexibles, en particulier de matières plastiques, de métaux, du verre ou d'une manière particulièrement préférée du bois, l'un avec l'autre ou avec lui-même.

11. Utilisation d'adhésifs au polyuréthane à deux composants selon la revendication 10, en vue de l'encollage de matières plastiques, de métaux, du verre ou du bois, l'un avec l'autre ou avec lui-même.
